# EUROPEAN PATENT SPECIFICATION

(11) **EP 2 476 347 B1**
(45) Date of publication and mention of the grant of the patent: **16.04.2014**
(21) Application number: 11380073.4
(22) Date of filing: 20.09.2011
(51) Int. Cl.: A47D 13/02, B60N 2/28

(54) **Method for manufacturing the body of baby carriers, carrycots and the like**
Verfahren zur Herstellung des Körpers einer Babytrage, eines Kindertragekorbs, und dergleichen
Procédé de fabrication d'un corps de porte-bébé, de berceau, et similaires

(30) Priority: 18.01.2011 ES 201130051
(43) Date of publication of application: 18.07.2012
(73) Proprietor: JANE, S.A., 08184 Palau de Plegamans (Barcelona) (ES)
(72) Inventor: Jane Santamaria, Manuel, 08184 Palau de Plegamans (Barcelona) (ES)
(74) Representative: Morgades y Manonelles, Juan Antonio

(56) References cited:
- EP-A2- 1 728 676
- US-A- 3 596 986
- US-A1- 2010 117 416

## Description

### AIM OF THE INVENTION

Method for manufacturing the body of baby carriers, carrycots and the like.

### BACKGROUND OF THE INVENTION

Today manufacturing the body of baby carriers and the like is carried out by producing a receptacle generally by injecting plastic material where there are attached the pieces that are to make up the inner parts, the bottom and the details that are to form the inside of the body, and this is an expensive manufacturing process obtaining the various parts separately and carrying out the operations for attaching the inner parts inside the receptacle.

Document EP-A-1 728 676 discloses the manufacturing of the body of a baby carrier.

### SUMMARY OF THE INVENTION

An object of this invention is a method for manufacturing the body of baby carriers and the like that is very simple, obtaining a body with reduced weight and in one piece and which does not require additional assembly, as all that is necessary is integrated in the part constituting the body.

This manufacturing method consists of three stages, in the first stage a first receptacle is manufactured, that is lightweight, corresponding to the inner part of the body, in the second stage a second receptacle is manufactured, that is resistant, corresponding to the outer part of the body, and in the third stage the first receptacle is attached on to the second receptacle and they are joined peripherally by the edges of the mouths thereof, as defined in claim 1.

The first receptacle, can be manufactured by extruding foamy material, such as "porexpan", and the second receptacle by injecting a resin, such as polycarbonate, with fibre glass.

The attachment between the first and the second receptacles can be made using various systems such as gluing, welding, screwing.

The body of the thus manufactured baby carrier has optimum shock absorbency in the event of a collision thanks to energy absorption, great rigidity thanks to the volumetric manufacturing system, and it is compact and very stable.

These and other characteristics will be appreciated further from the detailed description provided below, and to facilitate comprehension a sheet of drawings is attached illustrating a practical embodiment provided merely as a non-limiting example of the scope of this invention.

### DESCRIPTION OF THE DRAWINGS

Figure 1 illustrates a perspective view of the first receptacle, corresponding to the inner part of the body of a baby carrier,
Figure 2 illustrates a perspective view of the second receptacle, corresponding to the outer part of the body of a baby carrier, and
Figure 3 illustrates a perspective view of the body of the baby carrier obtained with the method that is the object of the invention.

### DESCRIPTION OF A PREFERRED EMBODIMENT

According to the drawings, the method for manufacturing the body of the baby carrier and the like consists in manufacturing a first receptacle (1), obtained by extruding a foamy material such as "porexpan", which will form the inner part of the body (2) of the baby carrier.

In the method the manufacturing of a second receptacle (3) is carried out, said receptacle being obtained by injecting a resin, such as polycarbonate, with fibre glass, which will form the outer part of the body (2) of the baby carrier.

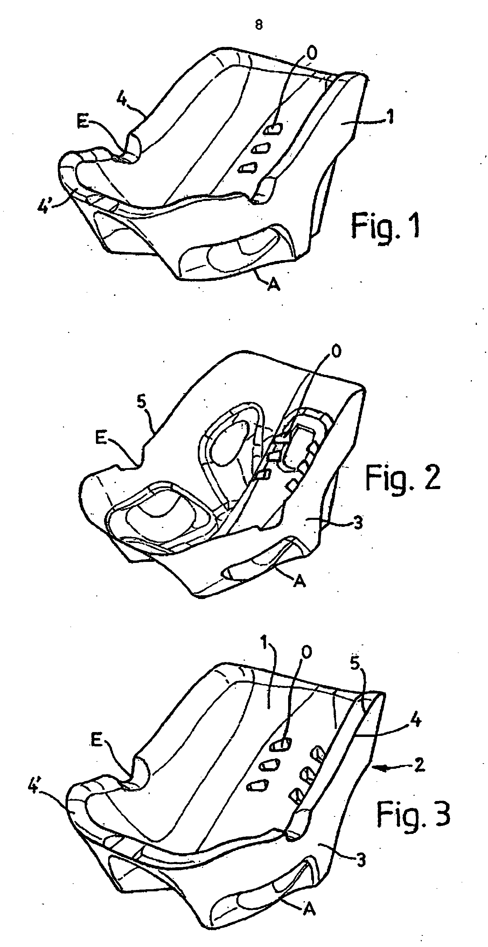

Continuing the manufacturing process, then the first receptacle (1) is attached on to the second receptacle (3) and they are joined peripherally by the edges of the mouths thereof (4 and 5) (Figure 3), using any suitable means such as for example gluing, or welding, or screwing. For this union, the edge of the mouth (4) of the first receptacle (1) is to have on its contour a flange (4') that is to be applied to the edge of the mouth (5) of the second receptacle (3).

According to the resistance required for the baby carrier, the two receptacles, which generally appear quite similar, are to have the relevant structure and design details such as the holes (0) in the back rest area for passing through the belts for holding the child, the lower supports (A), and the side holes (E) for passing through the seat belt for fastening the baby carrier to the car seat.

The obtained baby carrier body is to be completed with the conventional accessories such as applying a headrest, upholstery, and adding a handle for the transport thereof, and it is to have the necessary means for coupling it to a platform provided with isofix anchorage means for fixing the baby carrier on to a car seat.

The invention, within the essential nature thereof, can be implemented in other embodiments which only differentiate in detail from the one provided as an example, and which are to be equally protected. So, this method can be applied to manufacture the body of baby carriers, carrycots and the like, with the most suitable means and materials and with the most convenient accessories, as all are included within the scope of the claims.

## Claims

1. Method for manufacturing the body of baby carriers, carrycots and the like, **characterized in that** in a first stage a first receptacle (1) is manufactured by extrusion, that is lightweight, corresponding to the inner part of said body (2), in a second stage a second receptacle (3) is manufactured by injection which is resistant, corresponding to the outer part of the body (2), and in a third stage the first receptacle (1) is attached to the second receptacle (3), and they are joined peripherally by the edges of the mouths (4 and 5) thereof, for which the first receptacle (1) has on its contour of the edge of the mouth (4) a flange (4') that is to be applied to the edge of the mouth (5) of the second receptacle (3), these two receptacles generally appear quite similar.,

2. Method for manufacturing the body of baby carriers, carrycots and the like, according to claim 1, **characterized in that** the first receptacle (1) is manufactured by extruding a foamy material, such as "porexpan".

3. Method for manufacturing the body of baby carriers, carrycots and the like, according to claim 1, **characterized in that** the second receptacle (3) is manufactured by injecting a resin, such as polycarbonate, with fibre glass.

## Patentansprüche

1. Verfahren zur Herstellung des Körpers von Babytragesitzen, Babytragetaschen und dergleichen, **dadurch gekennzeichnet, dass** in einem ersten Schritt ein erstes leichtgewichtiges Behältnis (1), das den Innenteil des Körpers (2) darstellt, durch Strangpressen hergestellt wird, dass in einem zweiten Schritt ein zweites widerstandsfähiges Behältnis (3), das den Außenteil des Körpers (2) darstellt, durch Spritzgießen hergestellt wird und dass in einem dritten Schritt das erste Behältnis (1) an dem zweiten Behältnis (3) befestigt wird und beide peripher an den Rändern der Mündungen (4 und 5) miteinander verbunden werden, wofür das erste Behältnis (1) an der Kontur des Randes der Mündung (4) einen Flansch (4') aufweist, der am Rand der Mündung (5) des zweiten Behältnisses (3) aufgebracht wird, wobei diese beiden Behältnisse im Allgemeinen sehr ähnlich erscheinen.

2. Verfahren zur Herstellung des Körpers von Babytragesitzen, Babytragetaschen und dergleichen nach Anspruch 1, **dadurch gekennzeichnet, dass** das erste Behältnis (1) durch Strangpressen eines Schaumstoffs, beispielsweise expandiertes Polystyrol ("Porexpan®"), hergestellt wird.

3. Verfahren zur Herstellung des Körpers von Babytragesitzen, Babytragetaschen und dergleichen nach Anspruch 1, **dadurch gekennzeichnet, dass** das zweite Behältnis (3) durch Spritzgießen eines Harzes, beispielsweise Polycarbonat, mit Glasfaser hergestellt wird.

## Revendications

1. Procédé pour la fabrication du corps de porte-bébés, landaus et similaires, **caractérisé en ce que** dans une première étape un premier réceptacle (1) est fabriqué par extrusion, qui est léger, correspondant à la partie intérieure dudit corps (2), dans une seconde étape, un second réceptacle (3) est fabriqué par injection qui est résistant, correspondant à la partie extérieure du corps (2), et dans une troisième étape, le premier réceptacle (1) est fixé au deuxième réceptacle (3), et ils sont unis sur leur périphérie par les bords de leurs ouvertures (4 et 5), c'est pourquoi le premier réceptacle (1) incorpore sur le contour du bord de son ouverture (4) une bride (4') qui doit être appliquée sur le bord de l'ouverture (5) du second réceptacle (3), ces deux réceptacles apparaissant généralement assez semblables.

2. Procédé pour la fabrication du corps de porte-bébés, landaus et similaires, selon la revendication 1, **caractérisé en ce que** le premier réceptacle (1) est fabriqué en extrudant un matériau en mousse, comme le polystyrène expansé (« Porexpan® »).

3. Procédé pour la fabrication du corps de porte-bébés, landaus et similaires, selon la revendication 1, **caractérisé en ce que** le second réceptacle (3) est fabriqué en injectant une résine, comme le polycarbonate, avec de la fibre de verre.
